# EUROPEAN PATENT SPECIFICATION

(11) **EP 0 561 378 B1**
(45) Date of publication and mention of the grant of the patent: **18.06.1997**
(21) Application number: 93104346.7
(22) Date of filing: 17.03.1993
(51) Int. Cl.: G01D 5/24

(54) **Movement sensor of capacitive type**
Kapazitiver Wegsensor
Capteur de mouvement du type capacitif

(30) Priority: 20.03.1992 IT TO920236
(43) Date of publication of application: 22.09.1993
(73) Proprietor: IVECO FIAT S.p.A., 10156 Torino (IT)
(72) Inventor: Cisternino, Maurizio, 10100 Torino (IT); Tonello, Piero, 13043 Cigliano (IT); Cuzzucoli, Giuseppe, 10044 Pianezza (IT)
(74) Representative: Cerbaro, Elena

(56) References cited:
- EP-A- 0 169 272
- WO-A-89/01602
- DE-A- 3 923 042
- DE-C- 3 739 040
- US-A- 3 518 536

## Description

The present invention relates to a movement sensor of capacitive type, in particular for use in automatic gear changes, of the type defined in the preamble of claim 1.

As is known, potentiometric devices with sliding contacts are currently used to detect the movement, generally linear, of a moving component in automatic gear changes. These devices, although widely used, are subject to considerable wear and consequently have to be replaced fairly frequently.

Positional transducers of capacitive type are also generally known and are based on the measurement of plane capacitances whose value is directly proportional to the mutually facing area of the electrodes and inversely proportional to the distance of these electrodes. In automotive applications, in which small dimensions are needed and the area of the electrodes must therefore be small, it is necessary, in order to obtain adequate capacitance values, for the distance between the electrodes to be correspondingly small. It is thus necessary for the electrodes to have a high degree of parallelism which can currently be obtained only by expensive precision machining.

A capacitive sensor of the type defined in the preamble of claim 1 is disclosed in US-A-3,518,536, including two capacitors arranged in push-pull configuration, wherein only equivalent circuits of the capacitors are shown and the fixed plates of each capacitor are aligned to each other and face correspondingly aligned movable plates.

In DE-A-39 23 042 a capacitive path sensor is described including a single movable plate and a single fixed plate, the fixed plate being arranged in a groove of a body of a semiconductor material and defining projecting portions forming guides for corresponding projecting portions of the movable plate.

WO-A-89/01602 discloses a sensor working with the push-pull principle and having grooves in one plate for varying the distance between the plates of the capacitor between a minimun and a maximum.

DE-C-3 739 040 discloses a sensor having, in one embodiment thereof, two variable capacitors and two fixed capacitors.

The object of the present invention is to provide a movement sensor which resolves the drawbacks of known sensors and combines characteristics of reduced size and detection accuracy with a long service life and low costs.

The present invention relates to a movement sensor of capacitive type as defined in appended claim 1.

A preferred embodiment of the present invention is described in further detail below, purely by way of non-limiting example, with reference to the accompanying drawings, in which:
Fig. 1 is an exploded perspective view of some components of the sensor;
Fig. 2 is a longitudinal section through the sensor along the line II-II of Fig. 3;
Fig. 3 is a further longitudinal section through the sensor along the line III-III of Fig. 2;
Fig. 4 shows a detail of Fig. 3 on an enlarged scale;
Fig. 5 is a cross-section through the sensor along the line V-V of Fig. 2;
Fig. 6 is a simplified electrical diagram of the electronics associated with the sensor.

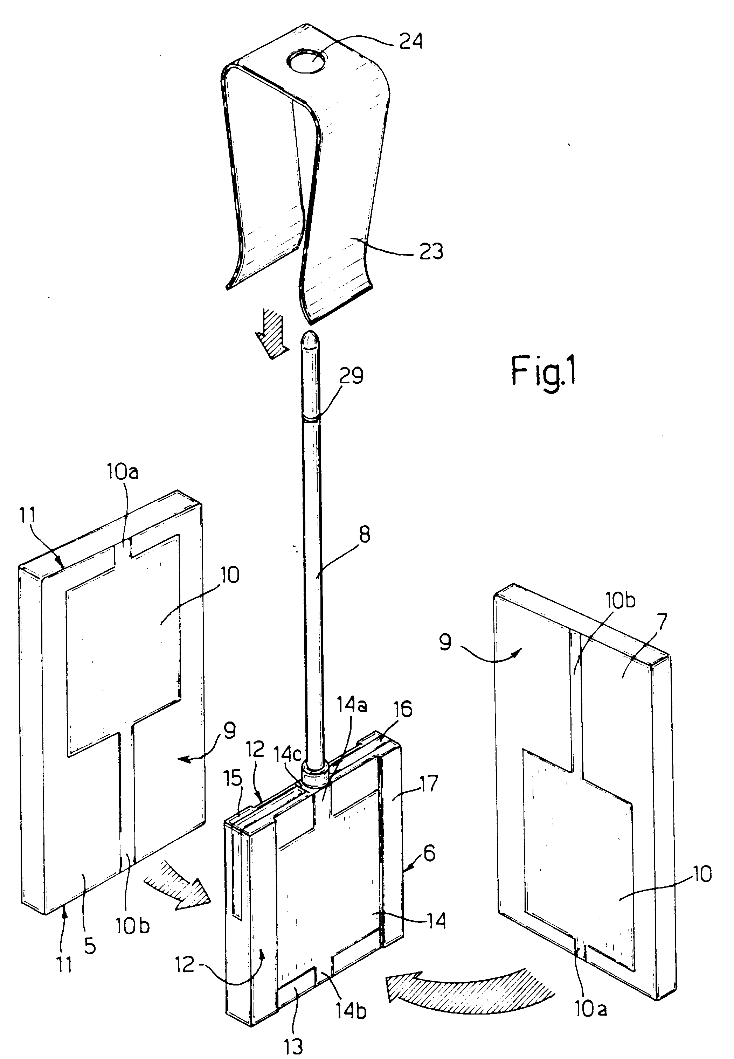

Figs. 1 to 5 shows a sensor 1 of capacitive type having a double differential.

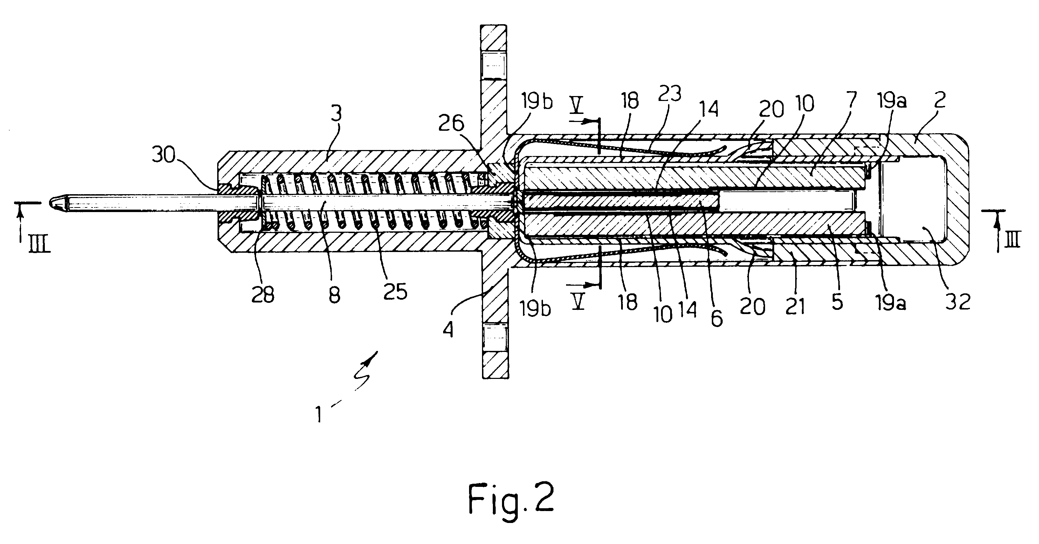

The sensor 1 comprises a box-shaped housing 2 in the form of a flattened parallelepiped provided with a hollow projection 3 of elongate shape projecting from a smaller side of the housing 2 and a fastening flange 4 (Fig. 2).

The housing 2 internally houses three ceramic (alumina) plates shown by 5, 6 and 7 sandwiched in contact with one another, with two fixed outer plates 5, 7 and an inner plate 6 moving rigidly with a leg 8 which extends longitudinally within the projection 3 and projects therefrom externally to the housing 2.

The outer plates 5 and 7 are identical and are provided, on their surface 9 facing the inner plate 6, with a metallization produced using the thick film technique and preferably of a silver-palladium alloy. In detail, the metallization forms a substantially rectangular or square zone 10 forming an electrode and disposed in the vicinity of the one of the short edges 11 which bound the surface 9 and at a certain distance from the opposite short edge 11. The surface 9 is also provided with two tracks 10a and 10b which each extend from the zone 10 to a respective edge 11. The two plates 5 and 7 are mounted in a reciprocally offset manner as is evident in Fig. 1 and is shown diagrammatically in Fig. 2.

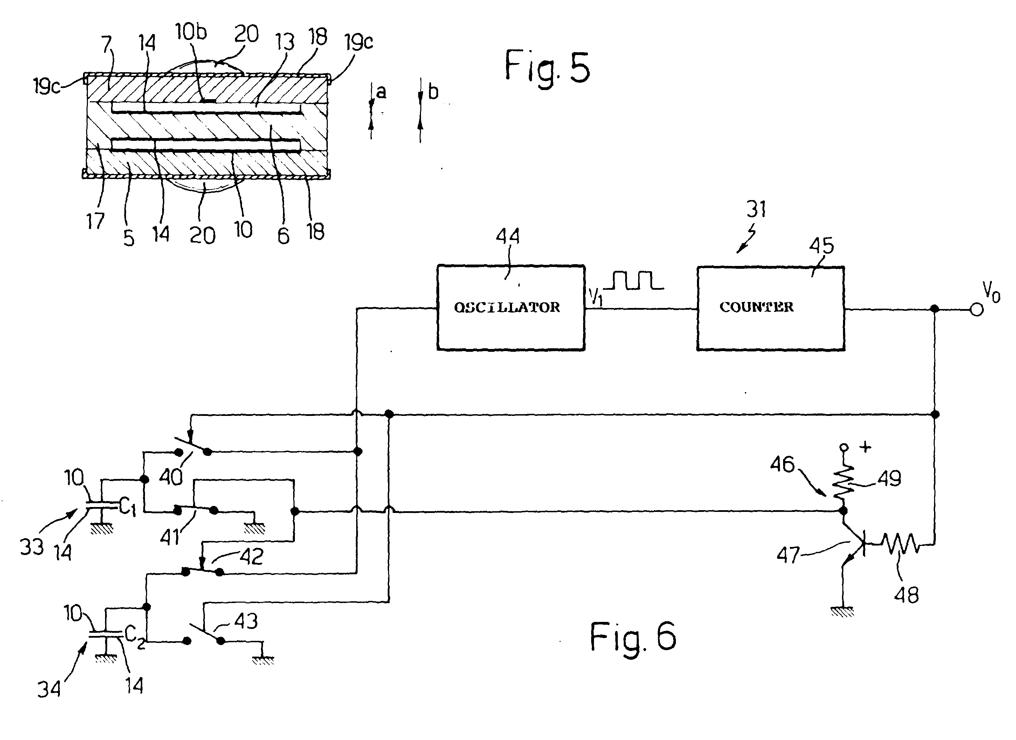

The length of the inner plate 6 is approximately half the length of the outer plates 5 and 7 (see Fig. 2 in particular). The inner plate 6 has, on both surfaces 12 facing the surfaces 9, a longitudinal groove 13 of depth b (typically 0.1 mm, see Fig. 5) bounded longitudinally by a pair of edges 17. A metallization 14, also made from a silver-palladium alloy using the thick film technique, is provided within the groove 13. As can be seen in particular from Fig. 5, the metallization 14 has a thickness (shown by a) much smaller than the thickness b of the groove (typically a = 0.5 µm) as a result of which the metallization 14 is embedded within the groove at a predetermined distance from the metallizations 10. The metallization 14 also forms a rectangle or square in this case and is connected at opposite edges of the plate 6 by connection portions 14a, 14b, of which at least the portions 14a also extend over the intermediate side 15 of the plate with the portion 14c so as to connect the two metallizations 14 electrically. A conductive strip 16 is glued on the intermediate side 15 and extends longitudinally over the whole side 15 and is prolonged over part of the two adjacent narrow sides. The conductive strip 16 is also soldered at a number of points (not shown) to the portion 14c and to one end of the leg 8.

The mutually facing surfaces 9 and 12 of the plates 5-7 are lapped in order to facilitate the sliding of the plate 6 with respect to the plates 5, 7.

The plates 5 and 7 are held in position by a pair of half-shells 18 each formed by a metal sheet adjacent to a respective plate 5, 7 on its surface not facing the moving plate 6 and having portions 19a, 19b and 19c folded about the respective plate. The half-shells 18 also comprise projecting flanges 20 obtained by punching and outward deformation of the metal sheet which bear against fixed abutments 21 formed by the housing 2 in order to ensure a secure positioning of the plates 5 and 7 within this housing 2.

The assembly formed by the plates 5-7 and the half-shells 18 is held by a U-shaped metal clip 23 provided with a through bore 24 for the passage of the leg 8.

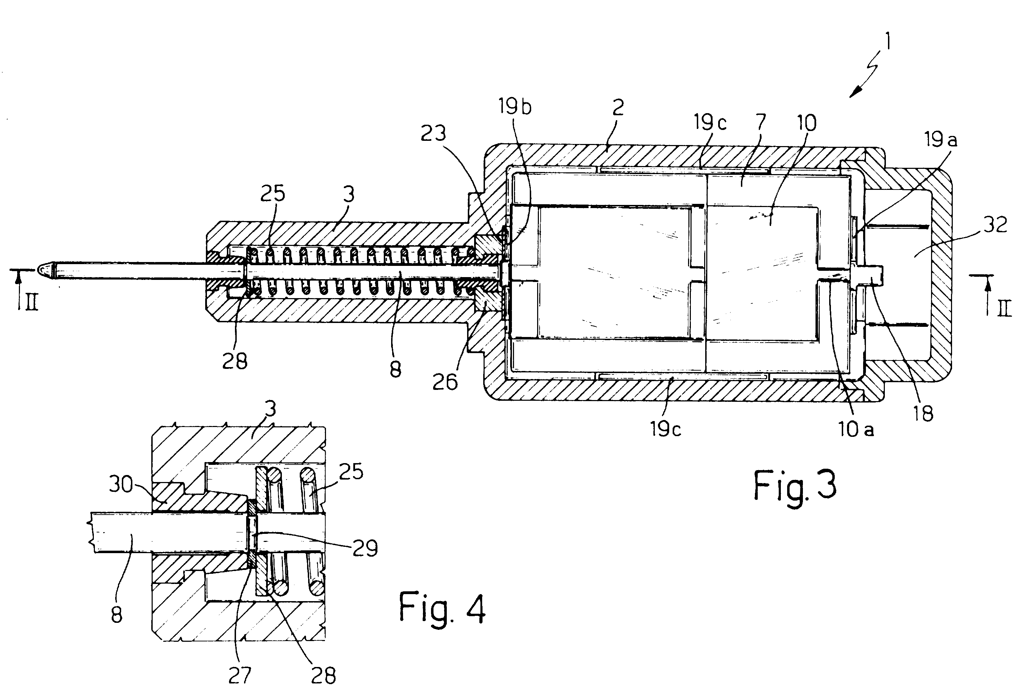

The moving plate 6 is subject to the action of a helical spring 25 wound about the leg 8 and housed within the projection 3. In detail, the spring 25 bears on one side against a bushing 26 rigid with the housing 2 and a washer 28 secured to the leg 8 by a SEEGER ring 27 partially housed in an annular groove 29 thereof as shown in detail in Fig. 4. The ring 27, in the position of maximum extension of the spring 25, bears against a bushing 30 which closes the free end of the projection 3.

The metallizations 10 and 14 form electrodes of two capacitors which are connected to an electrical circuit 31 shown in Fig. 6 and physically housed within the housing 2 in the zone shown by 32 in Fig. 2. The metallizations 14 are in particular connected to the earth of the circuit via the half-shells 18, the clip 23 and the portion 14c, while the electrodes 10 are connected to the circuit 31 via the portion 10b and the portion 10a by means of the plate 5 and the plate 7 respectively.

The capacitors, shown by 33 and 34 in Fig. 6, have a variable capacitance as a function of the position of the moving plate 6 and thus of the leg 8 rigid therewith. Specifically, the arrangement of the metallizations 10, 14 is such that when a capacitor, for instance 33, has a capacitance C₁ of maximum value, the other capacitor 34 has a capacitance C₂ of minimum value and vice versa, decreases in the capacitance of one capacitor corresponding to identical increases in the other capacitor. Consequently the ratio (C₁-C₂)/(C₁+C₂) varies in a linear manner as a function of the position of the moving member.

The circuit 31 is adapted to generate as output a digital signal Vₒ correlated with the capacitances C₁ and C₂ of the capacitors 33, 34. Specifically, the signal Vₒ is switched between a high state and a low state and the duration of each "half-period" is proportional to the value of each capacitance.

In detail, the circuit 31 comprises four switches 40-43 adapted to connect one of the two capacitors 33, 34 alternately to the input of an oscillator 44 whose output is connected to the input of a counter 45 which supplies the signal Vₒ as output. The switch 40 is connected via a first terminal to an electrode 10 of the capacitor 33 and via a second terminal to the oscillator 44, the switch 41 is connected via a first terminal to the same electrode 10 of the capacitor 33 and via a second terminal to earth, the switch 42 is connected via a first terminal to an electrode 10 of the capacitor 34 and via a second terminal to the oscillator 44, while the switch 43 is connected via a first terminal to the same electrode 10 of the capacitor 34 and via a second terminal to earth.

The switches 40 and 43 also comprise a control terminal connected directly to the output of the counter 45 while the switches 41 and 42 comprise their own control terminal connected to the output of the counter 45 via an inverter stage 46 comprising a transistor 47 of NPN type, whose emitter is connected to earth, whose base is connected to the output of the counter 45 via a resistor 48 and whose collector is connected to the positive supply via a resistor 49. The collector of the transistor 47 is also connected directly to the control terminal of the switches 41, 42.

In the circuit 31, the oscillator 44, typically formed by a Schmitt trigger, generates as output a signal V₁ whose period is proportional to the capacitance connected at that moment. This signal is divided by the counter 45 so as to obtain the signal Vₒ at a lower frequency which is also used to switch the capacitances. Assuming that the signal Vₒ is initially low, this low signal keeps the switches 40 and 43 open, while its inverse (generated by the inverter stage 46) keeps the switches 41 and 42 closed. Consequently, during this stage the capacitor 33 is connected to earth and the capacitor 34 is connected to the oscillator. The signal V₁ thus has a period proportional to C₂. After a predetermined number of cycles, the output of the counter 45 switches to the high state, closing the switches 40 and 43 and opening the switches 41 and 42. During this stage the capacitor 33 is consequently connected to the oscillator and the capacitor 34 is connected to earth. The signal V₁ thus has a period proportional to C₁. After a predetermined number of cycles, the output of the counter 45 switches again.

The duration of each half-period of the signal Vₒ (time during which the signal remains high or low) is thus proportional to the period of the signal V₁ and thus to the capacitances C₁ and C₂ and can therefore be used to detect the movement of the leg 8 rigid with the moving plate 6.

The above-described sensor makes it possible to detect the movements of the leg 8 and thus of the moving plate 6 as variations of capacitance, with a high-precision structure whose dimensions are very compact. This is possible as a result of the use of ceramics in the construction of the plates. Ceramic materials, which can be processed by stamping, allow dimensional tolerances and provide optimum reproducibility at acceptable costs.

Moreover, the structure of the sensor described above is simple and the components can be readily produced and assembled, thus reducing overall production costs and providing the sensor with a high level of reliability.

The circuit described above is also very simple and contains few components as a result of its characteristic feature of alternately detecting the two capacitance values, and is also able to offset the presence of drifts and similar deviations of the capacitance values from nominal values.

It will be appreciated that the sensor described and illustrated above may be subject to modifications and variants without departing from the protective scope of the present invention. In particular, although a sensor adapted to detect linear movements has been described, the same principle may be used for the detection of angular movements, in which the moving plate rotates with respect to the fixed plates. In this case, the shape of the electrodes may advantageously differ from the shape shown and may be, for instance, a sector of a circle or the like.

## Claims

1. A movement sensor (1) of capacitive type comprising a first and a second fixed members (5,7) bearing a first and a second fixed electrodes (10), respectively, and a moving member (6) bearing first and second moving electrodes (14), wherein the moving member (6) can be moved between two end positions in which the fixed and moving electrodes have different reciprocally facing areas,
characterized in that the moving member (6) is disposed between the first (5) and the second (7) fixed members, in that the moving member (6) comprises a flat plate having two opposite greater surfaces (12) each provided with projecting portions (17) and a retracted portion (13) which is retracted with respect to the projecting portions, in that said first and second moving electrodes (14) are arranged on a respective retracted portion of said greater surfaces facing a respective fixed electrode (10).

2. A sensor as claimed in claim 1, characterized in that the fixed and moving members (5-7) are made from ceramic material.

3. A sensor as claimed in claim 1 or 2, characterized in that the electrodes (10, 14) are made from metal using the thick film technique.

4. A sensor as claimed in one of claims 1 to 3, characterized in that the retracted portion is a groove (13) bounded by the projecting portions (17) and housing the moving electrode (14), this groove (13) having a depth (b) which is much greater than the moving electrode and in that the fixed member (5, 7) has a smooth surface (9) bearing the fixed electrode (10) and in contact with the projecting portions (17).

5. A sensor as claimed in one of claims 1-4, characterized in that each retracted portion (13) defines an elongate groove (13) extending between opposite edges of the plate and in that the fixed members (5, 7) respectively form a first (5) and a second (7) fixed flat plate, these fixed plates each having a greater flat surface (9) facing the respective greater surface (12) of the moving plate (6) and disposed in contact with the projecting portions (17), the greater surfaces of the fixed plates and the moving plate being lapped.

6. A sensor as claimed in claim 5, characterized in that the fixed electrodes (10) are disposed in an offset manner in the direction of movement of the moving plate (6) and in that the fixed electrodes and the moving electrodes (5, 7) are disposed such that in a first of these end positions a first of these moving electrodes (14) is substantially aligned with the first fixed electrode and a second of these moving electrodes (14) is offset with respect to this second fixed electrode (10) and in a second of these end positions the first moving electrode is offset with respect to the first fixed electrode and the second moving electrode is substantially aligned with the second fixed electrode.

7. A sensor as claimed in claim 5 or 6, characterized in that it comprises a pair of half-shells (18) each surrounding externally a respective fixed plate (5, 7) and being provided with a respective projecting flange (20) bearing against a fixed abutment (21).

8. A sensor as claimed in claim 7, characterized in that it comprises a resilient metal member (23) folded into a U shape and surrounding the plates (5-7) and the half-shells (18).

9. A sensor as claimed in claim 8, characterized in that the moving plate (6) is rigid with a leg (8) passing through this resilient member (23) and projecting from a housing (2) for the sensor (1), this housing containing resilient means (25) acting on the leg (8) and adapted resiliently to hold the moving plate (6) in a first end position.

10. A sensor as claimed in claim 9, characterized in that the leg (8) has an annular groove (29) housing a resilient support ring (27) for a washer (28), the resilient means (25) including a helical spring wound about the leg (8) and compressed between the washer (28) and a fixed abutment (26) of the housing (2).

11. A sensor as claimed in one of claims 5 to 10, characterized in that the fixed electrodes (10) are connected to an oscillator (44) by respective switch means (40-43) adapted alternately and selectively to connect the fixed electrodes (10) to this oscillator, the moving electrodes (14) being connected to a common potential line, the fixed (10) and moving (14) electrodes defining a first and a second capacitor (33, 34), the oscillator (44) generating as output a signal (V₁) of frequency correlated alternately with the capacitance (C₁, C₂) of the first and second capacitor.

12. A sensor as claimed in claim 11, characterized in that the output of the oscillator (44) is connected to a counter (45) adapted to generate as output a logic signal (Vₒ) switching between a high state and a low state after a predetermined number of pulses.

13. A sensor as claimed in claim 12, characterized in that the output of the counter (45) is connected directly to the control terminal of a first (40) of the switch means and, via an inverter stage (46), to a second (42) of the switch means.

## Patentansprüche

1. Kapazitiver Bewegungssensor (1) umfassend ein erstes und ein zweites ortsfestes Element (5, 7), die eine erste bzw. eine zweite ortsfeste Elektrode (10) tragen, und ein sich bewegendes Element (6), das erste und zweite sich bewegende Elektroden (14) trägt, wobei das sich bewegende Element (6) zwischen zwei Endstellungen bewegt werden kann, in der die ortsfesten und sich bewegenden Elektroden unterschiedliche einander zugewandte Bereiche haben,
**dadurch gekennzeichnet, daß** das sich bewegende Element (6) zwischen dem ersten (5) und dem zweiten ortsfesten Element (7) angeordnet ist, daß das sich bewegende Element (6) eine flache Platte umfaßt, die zwei entgegengesetzte größere Flächen (12) aufweist, wovon jede mit vorkragenden Abschnitten (17) und einem zurückversetzten Abschnitt (13) versehen ist, der bezüglich den vorkragenden Abschnitten zurückversetzt ist, daß die erste und die zweite sich bewegende Elektrode (14) auf einem jeweiligen zurückversetzten Abschnitt der größeren Flächen angeordnet sind, die einer jeweiligen ortsfesten Elektrode (10) zugewandt sind.

2. Sensor nach Anspruch 1, **dadurch gekennzeichnet, daß** die ortsfesten und sich bewegenden Elemente (5-7) aus einem keramischen Material hergestellt sind.

3. Sensor nach Anspruch 1 oder 2, **dadurch gekennzeichnet, daß** die Elektroden (10, 14) unter Verwendung der Dickfilmtechnik aus Metall hergestellt sind.

4. Sensor nach einem der Ansprüche 1 bis 3, **dadurch gekennzeichnet, daß** der zurückversetzte Abschnitt eine durch die vorkragenden Abschnitte (17) begrenzte Nut (13) ist und die sich bewegende Elektrode (14) aufnimmt, wobei die Nut (13) eine Tiefe (b) aufweist, die viel größer ist als die sich bewegende Elektrode, und daß das ortsfeste Element (5, 7) eine glatte Oberfläche (9) besitzt, die die ortsfeste Elektrode (10) trägt und mit den vorkragenden Abschnitten (17) in Berührung steht.

5. Sensor nach einem der Ansprüche 1 bis 4, **dadurch gekennzeichnet, daß** jeder zurückversetzte Abschnitt (13) eine langgestreckte Nut (13) definiert, die sich zwischen gegenüberliegenden Rändern der Platte erstreckt, und daß die ortsfesten Elemente (5, 7) jeweils eine erste (5) und eine zweite ortsfeste, flache Platte (7) bilden, wobei die ortsfesten Platten jeweils eine größere flache Fläche (9), die den jeweiligen größeren Flächen (12) der sich bewegenden Platte (6) zugewandt ist und mit den vorkragenden Abschnitten (17) in Berührung stehend angeordnet ist, aufweist, wobei die größeren Flächen der ortsfesten Platten und die sich bewegende Platte einander überdecken.

6. Sensor nach Anspruch 5, **dadurch gekennzeichnet, daß** die ortsfesten Elektroden (10) in Bewegungsrichtung der sich bewegenden Platte (6) versetzt (offset) angeordnet sind, und daß die ortsfesten Elektroden und die sich bewegenden Elektroden (5, 7) dergestalt angeordnet sind, daß in einer ersten dieser Endstellungen eine erste dieser sich bewegenden Elektroden (14) im wesentlichen mit der ersten ortsfesten Elektrode ausgerichtet ist, und eine zweite dieser sich bewegenden Elektroden (14) bezüglich dieser zweiten ortsfesten Elektrode (10) versetzt ist und in einer zweiten dieser Endstellungen die erste sich bewegende Elektrode bezüglich der ersten ortsfesten Elektrode versetzt ist und die zweite sich bewegende Elektrode im wesentlichen mit der zweiten ortsfesten Elektrode ausgerichtet ist.

7. Sensor nach Anspruch 5 oder 6, **dadurch gekennzeichnet, daß** dieser ein Paar Halbschalen (18) umfaßt, wovon jede eine ortsfeste Platte (5, 7) außenseitig umgibt und mit einem jeweiligen vorstehenden Flansch (20) versehen ist, der sich gegen ein ortsfestes Widerlager (21) abstützt.

8. Sensor nach Anspruch 7, **dadurch gekennzeichnet, daß** dieser ein federnd elastisches Metallelement (23) umfaßt, das in eine U-Form gebogen ist und die Platten (5-7) und die Halbschalen (18) umgibt.

9. Sensor nach Anspruch 8, **dadurch gekennzeichnet, daß** die sich bewegende Platte (6) mit einem Bein (8) starr ausgebildet ist, welches Bein (8) durch dieses federnd elastische Element (23) hindurchgeht und von einem Gehäuse (2) des Sensors (1) vorkragt, wobei dieses Gehäuse federnd elastische Mittel (25) beinhaltet, die auf das Bein (8) wirken und angepaßt sind, die sich bewegende Platte (6) in einer ersten Endstellung federnd elastisch zu halten.

10. Sensor nach Anspruch 9, **dadurch gekennzeichnet, daß** das Bein (8) eine ringförmige Nut (29) aufweist, die einen federnd elastischen Stützring (27) für eine Unterlegscheibe (28) aufnimmt, wobei das federnd elastische Mittel (25) eine Schraubenfeder beinhaltet, die um das Bein (8) herumgewunden und zwischen der Unterlegscheibe (28) und einem ortsfesten Widerlager (26) des Gehäuses (2) zusammengedrückt ist.

11. Sensor nach einem der Ansprüche 5 bis 10, **dadurch gekennzeichnet, daß** die ortsfesten Elektroden (10) über jeweilige Schaltermittel (40-43) mit einem Oszillator (44) verbunden sind, wobei die Schaltermittel angepaßt sind, abwechselnd und wahlweise die ortsfesten Elektroden (10) mit diesem Oszillator zu verbinden, wobei die sich bewegenden Elektroden (14) mit einer gemeinsamen Potentiallinie verbunden sind, die ortsfesten (10) und sich bewegenen Elektroden (14) einen ersten und einen zweiten Kondensator (33, 34) definieren, der Oszillator (44) als Ausgabe ein Signal (V₁) erzeugt, das eine mit den Kapazitäten (C₁, C₂) des ersten und zweiten Kondensators abwechselnd korrilierenden Frequenz besitzt.

12. Sensor nach Anspruch 11, **dadurch gekennzeichnet, daß** der Ausgang des Oszillators (44) mit einem Zähler (45) verbunden ist, der angepaßt ist als Ausgabe ein Logik-Signal (V₀) zu erzeugen, das zwischen einem hohen Zustand und einem niedrigen Zustand nach einer vorbestimmten Anzahl von Pulsen umschaltet.

13. Sensor nach Anspruch 12, **dadurch gekennzeichnet, daß** der Ausgang des Zählers (45) über eine Inverterstufe (46) mit dem Steueranschluß eines ersten Schaltmittels (40) der Schaltmittel direkt mit einem zweiten Schaltmittel (42) der Schaltmittel verbunden ist.

## Revendications

1. Capteur de déplacement (1) de type capacitif comprenant des premier et second éléments fixée (5,7) portant respectivement des première et seconde électrodes fixée (10), et un élément mobile (6) portant des première et seconde électrodes mobiles (14), l'élément mobile (6) pouvant être déplacé entre deux positions d'extrémité, dans lesquelles les électrodes fixes et mobiles ont des surfaces différentes qui se font face,
caractérisé en ce que l'élément mobile (6) est disposé entre le premier élément fixe (5) et le second élément fixe (7), en ce que l'élément mobile (6) comprend une plaque plane possédant deux surfaces plus étendues opposées (l2) comportant chacune des parties saillantes (17) et une partie en renfoncement (13), qui est en renfoncement par rapport aux parties saillantes, et en ce que lesdites première et seconde électrodes mobiles (14) sont disposées sur une partie respective en retrait desdites surfaces plus étendues qui sont tournées vers une électrode fixe respective (10).

2. Capteur selon la revendication 1, caractérisé en ce que les éléments fixes et mobiles (5-7) sont formés d'un matériau céramique.

3. Capteur selon la revendication 1 ou 2, caractérisé en ce que les électrodes (10,14) sont formées d'un métal moyennant l'utilisation de la technique à couches épaisses.

4. Capteur selon l'une des revendications 1 à 3, caractérisé en ce que la partie en retrait est une rainure (13) délimitée par les parties saillantes (17) et logeant l'électrode mobile (14), cette rainure (13) possédant une profondeur (b) qui est nettement plus grande que l'électrode mobile et en ce que l'élément fixe (5,7) possède une surface lisse (9) portant l'électrode fixe (10) et en contact avec les parties saillantes (17).

5. Capteur selon l'une des revendications 1-4, caractérisé en ce que chaque partie en retrait (13) définit une rainure allongée (13) s'étendant entre des bords opposés de la plaque et en ce que les éléments fixes (5,7) forment respectivement une première plaque plane fixe (5) et une seconde plaque plane fixe (7), ces plaques fixes possédant chacun une surface plane plus étendue (9) située en vis-à-vis de la surface respective plus étendue (12) de la plaque mobile (6) et placée en contact avec les parties saillantes (17), les surfaces plus étendues des plaques fixée et de la plaque mobile étant rodées.

6. Capteur selon la revendication 5, caractérisé en ce que les électrodes fixes (10) sont disposées d'une manière décalée dans la direction de déplacement de la plaque mobile (6) et en ce que les électrodes fixes et les électrodes mobiles (5,7) sont disposées de telle sorte que, dans une première de ces positions d'extrémité, une première de ces électrodes mobiles (14) est essentiellement alignée avec la première électrode fixe et qu'une seconde de ces électrodes mobiles (14) est décalée par rapport à cette seconde électrode fixe (10) et que, dans une seconde de ces positions d'extrémité, la première électrode mobile est décalée par rapport à la première électrode fixe et que la seconde électrode mobile est essentiellement alignée avec la seconde électrode fixe.

7. Capteur selon la revendication 5 ou 6, caractérisé en ce qu'il comprend un couple de demi-coques (18) entourant chacune extérieurement une plaque fixe respective (5,7) et équipée d'une bride saillante respective (20) s'appliquant contre une butée fixe (21).

8. Capteur selon la revendication 7, caractérisé en ce qu'il comporte un élément métallique élastique (23) replié en forme de U et entourant les plaques (5-7) et les demi-coques (18).

9. Capteur selon la revendication 8, caractérisé en ce que la plaque mobile (6) est solidaire d'un bras (8) qui traverse cet élément élastique (23) et fait saillie à partir d'un boîtier (2) pour le capteur (1), ce boîtier contenant des moyens élastiques (25) agissant sur le bras (8) et adaptée de manière à retenir élastiquement la plaque mobile (6) dans une première position d'extrémité.

10. Capteur selon la revendication 9, caractérisé en ce que le bras (8) possède une rainure annulaire (29) logeant une bague de support élastique (27) pour une rondelle (28), les moyens élastiques (25) comprenant un ressort hélicoïdal enroulé autour du bras (8) et comprimé entre la rondelle (28) et une butée fixe (26) du boîtier (2).

11. Capteur selon l'une quelconque des revendications 5 à 10, caractérisé en ce que les électrodes fixes (10) sont connectées à un oscillateur (44) par des moyens formant interrupteurs respectifs (40-43) adaptés pour connecter alternativement et sélectivement les électrodes fixes (10) à cet oscillateur, les électrodes mobiles (14) étant connectées à une ligne de potentiel commun, l'électrode fixe (10) et l'électrode mobile (14) définissant des premier et second condensateurs (33,34), l'oscillateur (44) produisant en tant que sortie un signal (V₁) ayant une fréquence corrélée alternativement à la capacité (C₁, C₂) des premier et second condensateurs.

12. Capteur selon la revendication 11, caractérisé en ce que la sortie de l'oscillateur (44) est connectée à un compteur (45) apte à produire en tant que signal de sortie un signal logique (V₀) commutant entre un niveau haut et un niveau bas au bout d'un nombre prédéterminé d'impulsions.

13. Capteur selon la revendication 12, caractérisé en ce que la sortie du compteur (45) est connectée directement à la borne de commande d'un premier (40) des moyens formant interrupteurs et, par l'intermédiaire d'un étage inverseur (46), a un second (42) des moyens formant interrupteurs.
